# FASCICULE DE BREVET EUROPEEN

(11) **EP 1 723 003 B1**
(45) Date de publication et mention de la délivrance du brevet: **01.10.2008**
(21) Numéro de dépôt: 05739414.0
(22) Date de dépôt: 03.03.2005
(51) Int. Cl.: B60Q 1/52

(54) **DISPOSITIF AVERTISSEUR PAR VIBRATIONS ET SIEGE COMPORTANT UN TEL DISPOSITIF**
SCHWINGUNGSWARNVORRICHTUNG UND DAMIT VERSEHENER SITZ
VIBRATORY WARNING DEVICE AND SEAT PROVIDED THEREWITH

(30) Priorité: 11.03.2004 FR 0450497
(43) Date de publication de la demande: 22.11.2006
(73) Titulaire: Peugeot Citroën Automobiles S.A., 78140 Vélizy Villacoublay (FR)
(72) Inventeur: LEFRANC, Francis, F-92150 SURESNES (FR)
(74) Mandataire: Couillard, Yann Luc Raymond
(86) Numéro de dépôt international: PCT/FR2005/050143
(87) Numéro de publication internationale: WO 2005/087544

(56) Documents cités:
- WO-A-03/011638
- DE-A- 4 029 657
- PATENT ABSTRACTS OF JAPAN vol. 2000, no. 11, 3 janvier 2001 (2001-01-03) & JP 2000 221051 A (MAZDA MOTOR CORP), 11 août 2000 (2000-08-11)
- PATENT ABSTRACTS OF JAPAN vol. 2000, no. 04, 31 août 2000 (2000-08-31) & JP 2000 020900 A (HITACHI LTD), 21 janvier 2000 (2000-01-21)

## Description

L'invention se rapporte à un dispositif avertisseur par vibrations ainsi qu'à un siège comportant un tel dispositif.

L'invention concerne plus particulièrement un dispositif avertisseur destiné à être fixé sur un élément de structure, tel qu'un siège de véhicule.

Un tel dispositif comprend des moyens vibratoires propres à créer une vibration mécanique sous l'effet d'un signal de commande, et des moyens de fixation aptes à rendre solidaire les moyens vibratoires avec une portion de l'élément de structure.

Le document WO03011638 décrit un tel dispositif conforme au préambule de la revendication principale, fixé sur la structure de l'assise d'un siège de véhicule automobile.

Dans ce système connu, la fixation du dispositif avertisseur est réalisée au moyen d'une bride maintenue par des vis de façon à emprisonner un fil métallique de la structure du siège entre la bride et une cale souple. La cale souple est elle-même en appui sur le boîtier du moteur du dispositif d'alarme.

Ce dispositif avertisseur a un fonctionnement global satisfaisant, cependant, sa fixation est relativement complexe et coûteuse. En effet, pour assurer la solidarisation de l'avertisseur avec un fil, un opérateur doit manipuler une bride et deux vis. Ceci nécessite l'utilisation de nombreuses pièces et des opérations longues et coûteuses pour une production à grande échelle.

Un but de la présente invention est de pallier tout ou partie des inconvénients de l'art antérieur relevés ci-dessus.

A cette fin, le dispositif avertisseur selon l'invention, par ailleurs conforme à la définition générique qu'en donne le préambule ci-dessus, est essentiellement caractérisé en ce que les moyens de fixation comportent une pièce élastique délimitant un interstice pourvu d'une ouverture apte à accueillir la portion de l'élément de structure de façon à assurer la fixation du dispositif par serrage de la pièce élastique sur la portion de l'élément de structure.

Par ailleurs, l'invention peut comporter l'une ou plusieurs des caractéristiques suivantes :
- la pièce élastique est conformée de façon à présenter un logement pour la portion de l'élément de structure et en ce que le logement débouche dans l'interstice,
- l'interstice est situé entre la pièce élastique et les moyens vibratoires,
- le dispositif comporte des moyens de rattrapage de jeu disposés entre la pièce élastique et les moyens vibratoires,
- le dispositif comporte des moyens de rattrapage de jeu disposés entre la pièce élastique et la portion de l'élément de structure,
- les moyens vibratoires sont disposés dans un boîtier, la pièce élastique étant formée par au moins une partie d'une paroi dudit boîtier,
- le dispositif comporte des moyens de maintien coopérant avec la pièce élastique de façon à limiter ou empêcher la déformation de cette dernière dans le sens d'un agrandissement de l'interstice,
- les moyens de maintien sont emboîtés de façon amovible sur le boîtier,
- les moyens de maintien assurent une pression sur la pièce élastique dans le sens d'un rétrécissement de l'interstice,
- le dispositif comporte des moyens de rattrapage de jeu disposés entre la pièce élastique et les moyens de maintien,
- les moyens de rattrapage de jeu comportent une portion en matériau déformable rapportée sur la pièce élastique ou venue de matière avec cette dernière,
- les moyens de rattrapage de jeu comportent une portion en matériau déformable rapportée sur les moyens de maintien ou venue de matière avec ces derniers,

L'invention concerne également un siège comportant au moins un dispositif avertisseur par vibrations conforme à l'une quelconque des caractéristiques précédentes.

Selon une autre particularité, le siège comporte une armature grillagée comprenant au moins un fil, les moyens de fixation du au moins un dispositif avertisseur étant rendus solidaire d'une portion du fil.

D'autres particularités et avantages apparaîtront à la lecture de la description ci-après, faite en référence aux figures dans lesquelles :
- la figure 1 représente une vue de dessus de l'armature de l'assise d'un siège de véhicule comportant deux dispositifs avertisseurs selon l'invention,
- la figure 2 représente une vue en perspective d'un dispositif avertisseur selon l'invention,
- les figures 3 à 5 représentent respectivement trois étapes dans la fixation du dispositif de la figure 2 sur un fil métallique,
- les figures 6 et 7 illustrent deux étapes supplémentaires de la fixation du dispositif avertisseur sur le fil,
- la figure 8 représente une vue en coupe schématique de la figure 7 illustrant le dispositif avertisseur fixé sur le fil métallique,
- la figure 9 représente une vue en perspective d'un détail de la figure 6, illustrant des moyens de maintien selon un premier mode de réalisation de l'invention,
- la figure 10 représente une vue en perspective du dispositif avertisseur selon le mode de réalisation de la figure 7,
- la figure 11 illustre, de façon analogue à la figure 6, une étape de la fixation du dispositif avertisseur sur un fil selon un second mode de réalisation de l'invention,
- la figure 12 représente une vue de dessus d'un détail de la figure 9, illustrant des moyens de maintien selon le second mode de réalisation de l'invention,
- la figure 13 représente une vue en coupe schématique de la figure 9 illustrant le dispositif avertisseur fixé sur le fil métallique.

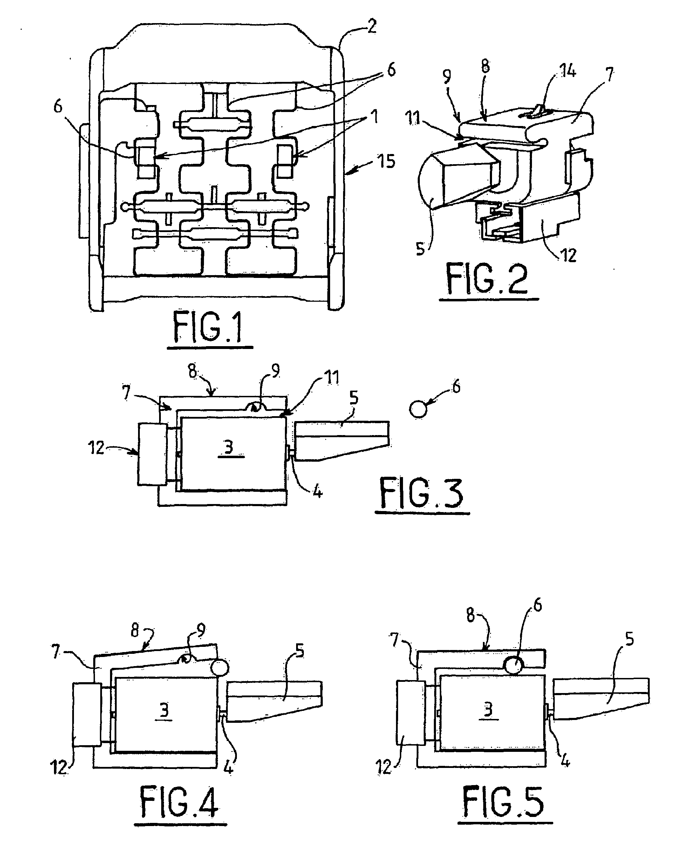

En se référant aux figures 2 et 3, le dispositif 1 avertisseur selon l'invention comprend un moteur 3 électrique entraînant un axe 4 auquel est solidarisée une masselotte 5. La masselotte 5 est constituée d'un élément pesant fixé de façon décentrée sur l'axe 4 de manière à créer un balourd lorsque l'axe 4 est entraîné en rotation par le moteur 3. L'entraînement en rotation du balourd provoque des vibrations mécaniques dont l'amplitude est fonction de la vitesse d'entraînement de l'axe 4 du moteur 3. Bien entendu, le générateur de vibration mécanique connu décrit ci-dessus peut être remplacé par tout autre système équivalent.

Le moteur 3 est logé dans un boîtier 7 de forme générale par exemple parallélépipédique et sensiblement en forme de U en coupe longitudinale (figure 3). Le moteur 3 est fixé dans le boîtier 7 par collage et/ou encliquetage ou par tout autre moyen équivalent.

Des moyens 12 de connexion électrique permettant de relier le moteur 3 à des câbles d'alimentation (non représentés) peuvent être prévus sur le boîtier 7.

La masselotte 5 fait saillie du boîtier 7. Une des parois 8 du boîtier 7 qui présente une extrémité libre est faiblement espacée du moteur 3. Plus précisément, une paroi 8 délimite un interstice 11 entre le moteur 3 et le boîtier 7. L'interstice 11 présente une ouverture permettant d'engager en son sein un fil 6 métallique de la structure du siège.

Les dimensions transverses de l'interstice 11 sont inférieures aux dimensions transverses du fil 6 de sorte que l'engagement du fil 6 dans l'interstice 11 est obtenu par une légère déformation de la paroi 8 du boîtier 7 (figure 4). Par exemple, la paroi 8 se déforme en flexion. Le boîtier 7 est constitué, par exemple, d'un matériau comprenant du plastique.

Dès lors, le boîtier 7 est maintenu sur le fil 6 par serrage de ce dernier entre la paroi 8 et le moteur 3. L'avertisseur 1 est ainsi serré sur le fil 6 ce qui assure une parfaite transmission des vibrations mécaniques du moteur 3 vers le fil 6.

La paroi 8 peut présenter avantageusement une cavité formant un logement 9 pour le fil 6. Le logement 9 assure un meilleur calage du fil 6 dans l'interstice 11 (figures 4 et 5). Le logement a, par exemple, une forme complémentaire d'au moins une partie de la forme extérieure du support (logement en forme de rainure dans le cas d'un fil par exemple).

Pour assurer un serrage encore amélioré de l'avertisseur 1 sur son support (fil 6), des moyens de maintien 10 supplémentaires peuvent être prévus pour coopérer avec la paroi élastique 8 du boîtier 7, de façon à limiter ou empêcher la déformation de cette dernière dans le sens d'un agrandissement de l'interstice 11.

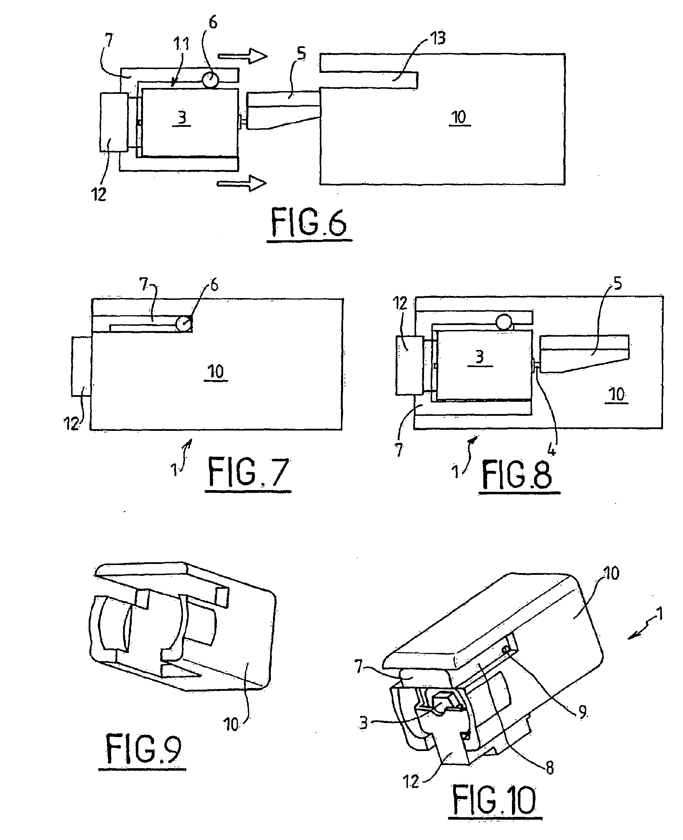

Les moyens de maintien peuvent être constitués, par exemple, d'un second boîtier 10 ayant une face ouverte pour permettre son emboîtement sur le premier boîtier 7 (cf. figure 9). A cet effet, le second boîtier 10 comporte deux rainures 13 prévues pour permettre le passage du fil 6. Les premier 7 et second 10 boîtier peuvent être maintenus solidaire par des moyens de verrouillage amovibles complémentaires. Par exemple, les deux boîtiers 7, 10 peuvent avoir des moyens complémentaires d'encliquetage (cf. figure 2, la languette 14 élastique destinée à coopérer avec un logement complémentaire situé à l'intérieur du second boîtier 10).

Le second boîtier 10 a des dimensions choisies de façon à assurer une pression sur la paroi 8 dans le sens d'un rétrécissement de l'interstice 11. Dès lors, une liaison mécanique particulièrement sûre est réalisée entre le fil métallique 6 et l'avertisseur 1.

Comme représenté aux figures 7, 8 et 10, le second boîtier 10 peut être dimensionné de façon à accueillir en son sein aussi bien le premier boîtier 7 que la masselotte 5 vibrante.

Ainsi, lorsque l'avertisseur 1 est fixé au moyen des deux boîtiers 7, 10, le fil 9 ne peut pas s'échapper accidentellement de l'interstice 11 du premier boîtier 7.

La figure 1 illustre un exemple d'utilisation non limitatif du dispositif 1 avertisseur selon l'invention. L'armature 15 d'assise de siège représentée à la figure 1 comporte un grillage constitué de fils métalliques 6. Deux dispositifs 1 avertisseurs vibratoires sont fixés sur respectivement deux fils 6. Les deux dispositifs peuvent être couplés, de façon connue, à un système de surveillance de trajectoire latérale, de façon à indiquer à l'utilisateur du véhicule assis sur son siège une dérive de trajectoire (un avertisseur par côté).

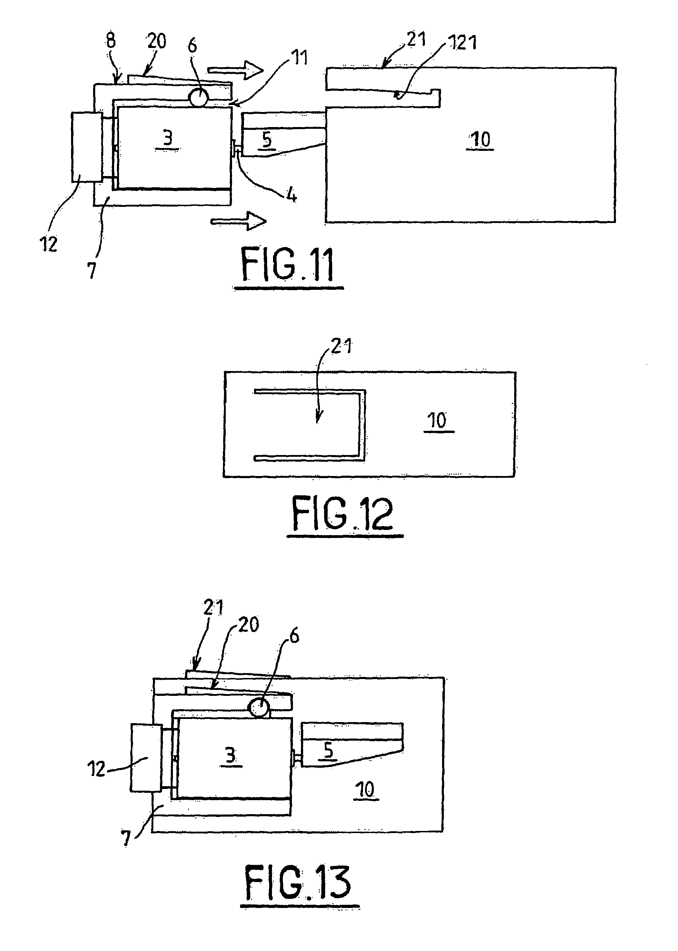

Les figures 11 à 13 illustrent un autre mode de réalisation avantageux de l'invention. Par soucis de simplification, les éléments identiques à ceux décrits ci-dessus sont désignés par les mêmes références numériques et ne sont pas décrit à nouveau en détail.

L'exemple de réalisation de la figure 11 se distingue de celui de la figure 6 uniquement en ce que des moyens 20 de rattrapage de jeu sont prévus entre le premier 7 et le second boîtier 10. Les moyens 20 de rattrapage de jeu sont disposés, par exemple, sur une ou plusieurs faces extérieures du premier 7 boîtier, de préférence sur la paroi 8 élastique. Les moyens 20 de rattrapage de jeu comportent, par exemple, une portion 20 ou une couche en matériau déformable située sur la face extérieure de la paroi 8. Par exemple, une couche 20 en matériau élastique tel que du silicone ou du caoutchouc est rapportée sur la paroi 8. La couche a, par exemple, une épaisseur décroissante en direction de l'extrémité libre de la paroi 8. La couche 20 élastique est destinée à coopérer avec le second boîtier 10 pour rattraper les jeux dimensionnels éventuels entre ces deux pièces. Les bruits parasites sont ainsi supprimés ou au moins diminués.

De la même façon, le second boîtier 10 peut comporter des moyens 21 de rattrapage de jeu. En particulier, comme représenté aux figures 11 à 13, le second boîtier 10 peut comporter des moyens 21 de rattrapage de jeu complémentaires des moyens 20 de rattrapage de jeu du premier boîtier 7. Par exemple, le second boîtier 10 comprend une découpe dans une de ses faces formant une languette 21 élastique destinée à coopérer par contact et pression avec la couche élastique 20 du premier boîtier 7. C'est-à-dire que lorsque le premier boîtier 7 est engagé dans le second boîtier 10, les dimensions relatives des deux pièces 7, 10 conduisent à une déformation de la languette 21 (cf. figure 13). Plus précisément, la languette 21 du second boîtier 10 maintient une pression élastique sur la couche 20 et donc sur le premier boîtier 7. Avantageusement, la face 121 de la languette 21 destinée à venir en contact avec la couche 20 élastique peut avoir un profil complémentaire de celui de la couche 20 élastique (plan incliné par exemple, cf. figure 11).

Bien entendu, l'invention n'est pas limitée à cet exemple de réalisation. Ainsi, la couche 20 élastique peut être constituée de tout autre matériau approprié. De plus, la couche ou portion 20 élastique peut être venue de matière avec la paroi 7. C'est-à-dire que le matériau constituant la paroi 8 (et/ou le boîtier) peut avoir des propriétés physiques élastiques assurant ce rattrapage de jeu. De cette façon, il n'est pas nécessaire de prévoir une opération consistant à déposer une couche sur le boîtier 7. Par exemple, la paroi 8 et/ou le boîtier 7, 10 peut être constitué d'un matériau du type désigné par la référence PAA6.

De même, il est possible de prévoir des moyens de rattrapage de jeu tels que décrits ci-dessus entre la paroi 8 et le moteur 3 ou sur d'autres parties du moteur 3, ou des boîtiers 7, 10.

Ainsi, tout en étant de structure simple et peu coûteuse, l'invention permet une fixation rapide, simple et fiable d'un avertisseur sur un support.

## Revendications

1. Dispositif avertisseur par vibrations destiné à être fixé sur un élément de structure (2), tel qu'un siège de véhicule, comprenant des moyens (3, 4, 5) vibratoires propres à créer une vibration mécanique sous l'effet d'un signal de commande, des moyens (7, 8, 9) de fixation aptes à rendre solidaire les moyens (3, 4, 5) vibratoires avec une portion (6) de l'élément de structure (2), **caractérisé en ce que** les moyens de fixation comportent une pièce élastique (8) délimitant un interstice (11) entre ladite pièce élastique (8) et les moyens (3, 4, 5) vibratoires pourvu d'une ouverture apte à accueillir la portion (6) de l'élément de structure (2) de façon à assurer la fixation du dispositif par serrage de la pièce élastique (8) sur la portion (6) de l'élément de structure.

2. Dispositif avertisseur selon la revendication 1 ou 2, **caractérisé en ce que** la pièce élastique (8) est conformée de façon à présenter un logement (9) pour la portion (6) de l'élément de structure (2) et **en ce que** le logement (9) débouche dans l'interstice (11).

3. Dispositif avertisseur selon l'une quelconque des revendications précédentes, **caractérisé en ce que** l'interstice (11) est situé entre la pièce élastique (8) et les moyens (3, 4, 5) vibratoires.

4. Dispositif avertisseur selon la revendication 3, **caractérisé en ce qu'**il comporte des moyens de rattrapage de jeu disposés entre la pièce élastique (8) et les moyens (3, 4, 5) vibratoires.

5. Dispositif avertisseur selon l'une quelconque des revendications précédentes, **caractérisé en ce qu'**il comporte des moyens de rattrapage de jeu disposés entre la pièce élastique (8) et la portion (6) de l'élément de structure.

6. Dispositif avertisseur selon l'une quelconque des revendications précédentes, **caractérisé en ce que** les moyens (3, 4, 5) vibratoires sont disposés dans un boîtier (7) et **en ce que** la pièce élastique (8) est formée par au moins une partie d'une paroi dudit boîtier (7).

7. Dispositif avertisseur selon l'une quelconque des revendications précédentes, **caractérisé en ce qu'**il comporte des moyens (10) de maintien coopérant avec la pièce élastique (8) de façon à limiter ou empêcher la déformation de cette dernière dans le sens d'un agrandissement de l'interstice (11).

8. Dispositif avertisseur selon les revendications 6 et 7, **caractérisé en ce que** les moyens (10) de maintien sont emboîtés de façon amovible sur le boîtier (7).

9. Dispositif avertisseur selon la revendication 7 ou 8, **caractérisé en ce que** les moyens (10) de maintien assurent une pression sur la pièce élastique (8) dans le sens d'un rétrécissement de l'interstice (11).

10. Dispositif avertisseur selon l'une quelconque des revendications 7 à 9, **caractérisé en ce qu'**il comporte des moyens (20, 21) de rattrapage de jeu disposés entre la pièce élastique (8) et les moyens (10) de maintien.

## Claims

1. Vibration-based warning device designed to be attached to a structural element (2), such as a vehicle seat, comprising vibratory means (3, 4, 5) suitable for creating a mechanical vibration under the effect of a control signal, attachment means (7, 8, 9) suitable for fixedly attaching the vibratory means (3, 4, 5) to a portion (6) of the structural element (2), **characterized in that** the attachment means comprise an elastic part (8) delimiting an interstice (11) between the said elastic part (8) and the vibratory means (3, 4, 5) provided with an opening capable of receiving the portion (6) of the structural element (2) so as to ensure the attachment of the device by clamping of the elastic part (8) on to the portion (6) of the structural element.

2. Warning device according to Claim 1, **characterized in that** the elastic part is produced so as to have a housing (9) for the portion (6) of the structural element (2) and **in that** the housing (9) leads into the interstice (11).

3. Warning device according to either one of the preceding claims, **characterized in that** the interstice (11) is situated between the elastic part (8) and the vibratory means (3, 4, 5).

4. Warning device according to Claim 3, **characterized in that** it comprises clearance uptake means placed between the elastic part (8) and the vibratory means (3, 4, 5).

5. Warning device according to any one of the preceding claims, **characterized in that** it comprises clearance uptake means placed between the elastic part (8) and the portion (6) of the structural element.

6. Warning device according to any one of the preceding claims, **characterized in that** the vibratory means (3, 4, 5) are placed in a casing (7) and **in that** the elastic part (8) is formed by at least a portion of a wall of the said casing (7).

7. Warning device according to any one of the preceding claims, **characterized in that** it comprises retention means (10) interacting with the elastic part (8) so as to limit or prevent the deformation of the latter in the direction of an enlargement of the interstice (11).

8. Warning device according to Claims 6 and 7, **characterized in that** the retention means (10) are nested in a removable manner on the casing (7).

9. Warning device according to Claim 7 or 8, **characterized in that** the retention means (10) press on the elastic part (8) in the direction of a narrowing of the interstice (11).

10. Warning device according to any one of Claims 7 to 9, **characterized in that** it comprises clearance uptake means (20, 21) placed between the elastic part (8) and the retention means (10).

## Patentansprüche

1. Vibrations-Warnvorrichtung, die dazu bestimmt ist, an einem Strukturelement (2) wie einem Autositz befestigt zu werden, mit Vibrationsmitteln (3, 4, 5), die geeignet sind, um eine mechanische Vibration unter der Wirkung eines Steuersignals zu erzeugen, mit Befestigungsmitteln (7, 8, 9), die fähig sind, die Vibrationsmittel (3, 4, 5) fest mit einem Abschnitt (6) des Strukturelements (2) zu verbinden, **dadurch gekennzeichnet, dass** die Befestigungsmittel ein elastisches Bauteil (8) aufweisen, das einen Zwischenraum (11) zwischen dem elastischen Bauteil (8) und den Vibrationsmitteln (3, 4, 5) begrenzt, der mit einer Öffnung versehen ist, die geeignet ist, um den Abschnitt (6) des Strukturelements (2) aufzunehmen, um die Befestigung der Vorrichtung durch Festklemmen des elastischen Bauteils (8) auf dem Abschnitt (6) des Strukturelements zu gewährleisten.

2. Warnvorrichtung nach Anspruch 1, **dadurch gekennzeichnet, dass** das elastische Bauteil (8) so geformt ist, dass es eine Aufnahme (9) für den Abschnitt (6) des Strukturelements (2) aufweist, und dass die Aufnahme (9) in den Zwischenraum (11) mündet.

3. Warnvorrichtung nach einem der vorhergehenden Ansprüche, **dadurch gekennzeichnet, dass** der Zwischenraum (11) sich zwischen dem elastischen Bauteil (8) und den Vibrationsmitteln (3, 4, 5) befindet.

4. Warnvorrichtung nach Anspruch 3, **dadurch gekennzeichnet, dass** sie Spielausgleichsmittel aufweist, die zwischen dem elastischen Bauteil (8) und den Vibrationsmitteln (3, 4, 5) angeordnet sind.

5. Warnvorrichtung nach einem der vorhergehenden Ansprüche, **dadurch gekennzeichnet, dass** sie Spielausgleichsmittel aufweist, die zwischen dem elastischen Bauteil (8) und dem Abschnitt (6) des Strukturelements angeordnet sind.

6. Warnvorrichtung nach einem der vorhergehenden Ansprüche, **dadurch gekennzeichnet, dass** die Vibrationsmittel (3, 4, 5) in einem Gehäuse (7) angeordnet sind, und dass das elastische Bauteil (8) aus mindestens einem Teil einer Wand des Gehäuses (7) geformt wird.

7. Warnvorrichtung nach einem der vorhergehenden Ansprüche, **dadurch gekennzeichnet, dass** sie Haltemittel (10) aufweist, die mit dem elastischen Bauteil (8) zusammenwirken, um die Verformung dieses letzteren in Richtung einer Vergrößerung des Zwischenraums (11) zu begrenzen oder zu verhindern.

8. Warnvorrichtung nach Anspruch 6 und 7, **dadurch gekennzeichnet, dass** die Haltemittel (10) entfernbar auf das Gehäuse (7) aufgesteckt sind.

9. Warnvorrichtung nach Anspruch 7 oder 8, **dadurch gekennzeichnet, dass** die Haltemittel (10) einen Druck auf das elastische Bauteil (8) in Richtung einer Verengung des Zwischenraums (11) gewährleisten.

10. Warnvorrichtung nach einem der Ansprüche 7 bis 9, **dadurch gekennzeichnet, dass** sie Spielausgleichsmittel (20, 21) aufweist, die zwischen dem elastischen Bauteil (8) und den Haltemitteln (10) angeordnet sind.
